# EUROPEAN PATENT APPLICATION

(11) **EP 2 863 636 A1**
(43) Date of publication of application: **22.04.2015**
(21) Application number: 14181527.4
(22) Date of filing: 20.08.2014
(51) Int. Cl.: H04N 13/04

(54) **3D display device and method**

(30) Priority: 21.10.2013 JP 2013218583
(71) Applicant: Kabushiki Kaisha Toshiba, Tokyo 105-8001 (JP); Toshiba Lifestyle Products & Services Corporation, Ome-shi, Tokyo 198-8710 (JP)
(72) Inventor: Sugiyama, Tooru, Tokyo, 105-8001 (JP)
(74) Representative: Henkel, Breuer & Partner

(57) **Abstract**

According to one embodiment, a stereoscopic display device (1) characterized by comprising an image signal output modules (41) configured to output a first image signal for a first image and a second image signal for a second image alternately, the second image which is to be viewed alternately with the first image, a display (26) configured to display the first image and second image corresponding to the first image signal and the second image signal output from the image signal output module, a lighting module (28) configured to light the first image and second image displayed by the display, a driving module (29) configured to control a lighting timing of the first image and second image by the lighting module, and a shutter controller (44) configured to control a timing of opening a first shutter which makes the first image viewable and a second shutter which makes the second image viewable alternately, according to a timing of the alternate output of the first image signal and the second image signal by the image signal output module, while providing a period of closing both of the first shutter and the second shutter.

## Description

Embodiments described herein relate generally to an electronic device configured to display a stereoscopic image and to a display correction method.

Image-displaying electronic apparatuses can display a stereoscopic image which makes a user perceive a stereoimage by utilizing parallax between the right and left eyes.

The stereoscopic image is produced by letting the user view a right-eye image and a left-eye image. Here, the following shutter method is in actual use. That is, for example, the right- and left-eye images are displayed alternately and, in a shutter device (glasses for stereoscopic vision), a shutter for the left eye is closed during the display period of the right-eye images whereas a shutter for the right eye is closed during the display period of the left-eye images.

In the electronic device, a liquid crystal display (LCD) panel and a light-emitting diode (LED) lighting device have been widely used as a display panel for image display and as a source light device (backlight) for the display panel, respectively.

In the LED lighting devices, however, the quality of the stereoscopic image may be degraded because of the influence of characteristics of a color output (light emitted) by an LED element of each of color components (red, green and blue) which produce white light and the influence of a shutter control time in the shutter method.

The object of the present invention is to provide an electronic device configured to display a stereoscopic image and to provide a display correction method.

A general architecture that implements the various features of the embodiments will now be described with reference to the drawings. The drawings and the associated descriptions are provided to illustrate the embodiments and not to limit the scope of the invention.
FIG. 1 shows an exemplary diagram showing an example of a main unit of an electronic device (television apparatus) according to an embodiment;
FIG. 2 shows an exemplary diagram showing an example of a stereoscopic image processing unit of an electronic device according to an embodiment;
FIG. 3 shows an exemplary diagram showing an example of a serialization processing unit of an electronic device according to an embodiment;
FIG. 4A shows an exemplary diagram showing an example of timings to drive a liquid crystal panel in an electronic device according to an embodiment;
FIG. 4B shows an exemplary diagram showing an example of characteristics of pixels of a liquid crystal panel in an electronic device according to an embodiment;
FIG. 4C shows an exemplary diagram showing an example of timings of opening a shutter for right eye and a shutter for left eye in an electronic device according to an embodiment;
FIG. 4D shows an exemplary diagram showing an example of timings to drive a lighting device in an electronic device according to an embodiment;
FIG. 5A shows an exemplary diagram showing an example of timings to drive a liquid crystal panel in an electronic device according to an embodiment;
FIG. 5B shows an exemplary diagram showing an example of timings to drive a lighting device in an electronic device according to an embodiment;
FIG. 5C shows an exemplary diagram showing an example of timings of opening a shutter for right eye and a shutter for left eye in an electronic device according to an embodiment;
FIG. 5D shows an exemplary diagram showing an example of timings to drive a lighting device in an electronic device currently-employed according to an embodiment (same as shown in FIG. 4D);
FIG. 6A shows an exemplary diagram showing an example of timings to drive a liquid crystal panel in an electronic device according to an embodiment;
FIG. 6B shows an exemplary diagram showing an example of timings to drive a lighting device in an electronic device according to an embodiment;
FIG. 6C shows an exemplary diagram showing an example of timings of opening a shutter for right eye and a shutter for left eye in an electronic device according to an embodiment;
FIG. 6D shows an exemplary diagram showing an example of timings to drive a lighting device in an electronic device currently-employed according to an embodiment (same as shown in FIG. 4D);
FIG. 7 shows an exemplary diagram showing an example of a backlight of a scanning mode in an electronic device according to an embodiment;
FIG. 8A shows an exemplary diagram showing an example of timings to drive a liquid crystal panel in an electronic device according to an embodiment;
FIG. 8B shows an exemplary diagram showing an example of timings to drive a lighting device in an electronic device according to an embodiment;
FIG. 8C shows an exemplary diagram showing an example of timings of opening a shutter for right eye and a shutter for left eye in an electronic device according to an embodiment;
FIG. 8D shows an exemplary diagram showing an example of timings to drive a lighting device in an electronic device currently-employed according to an embodiment (same as shown in FIG. 4D);
FIG. 9A shows an exemplary diagram showing an example of timings to drive a liquid crystal panel in an electronic device according to an embodiment;
FIG. 9B shows an exemplary diagram showing an example of timings to drive a lighting device in an electronic device according to an embodiment;
FIG. 9C shows an exemplary diagram showing an example of timings of opening a shutter for right eye and a shutter for left eye in an electronic device according to an embodiment;
FIG. 9D shows an exemplary diagram showing an example of timings to drive a lighting device in an electronic device currently-employed according to an embodiment (same as shown in FIG. 4D); and
FIG. 10 shows an exemplary diagram showing an example of a backlight of a blinking mode in an electronic device according to an embodiment.

Various embodiments will be described hereinafter with reference to the accompanying drawings.

In general, according to one embodiment, an electronic device comprising: an image signal output module configured to output a first image signal for a first image and a second image signal for a second image alternately, the second image which is to be viewed alternately with the first image; a display configured to display the first image and second image corresponding to the first image signal and the second image signal output from the image signal output module; a lighting module configured to light the first image and second image displayed by the display; a driving module configured to control a lighting timing of the first image and second image by the lighting module; and a shutter controller configured to control a timing of opening a first shutter which makes the first image viewable and a second shutter which makes the second image viewable alternately, according to a timing of the alternate output of the first image signal and the second image signal by the image signal output module, while providing a period of closing both of the first shutter and the second shutter.

Embodiments will now be described hereinafter in detail with reference to the accompanying drawings.

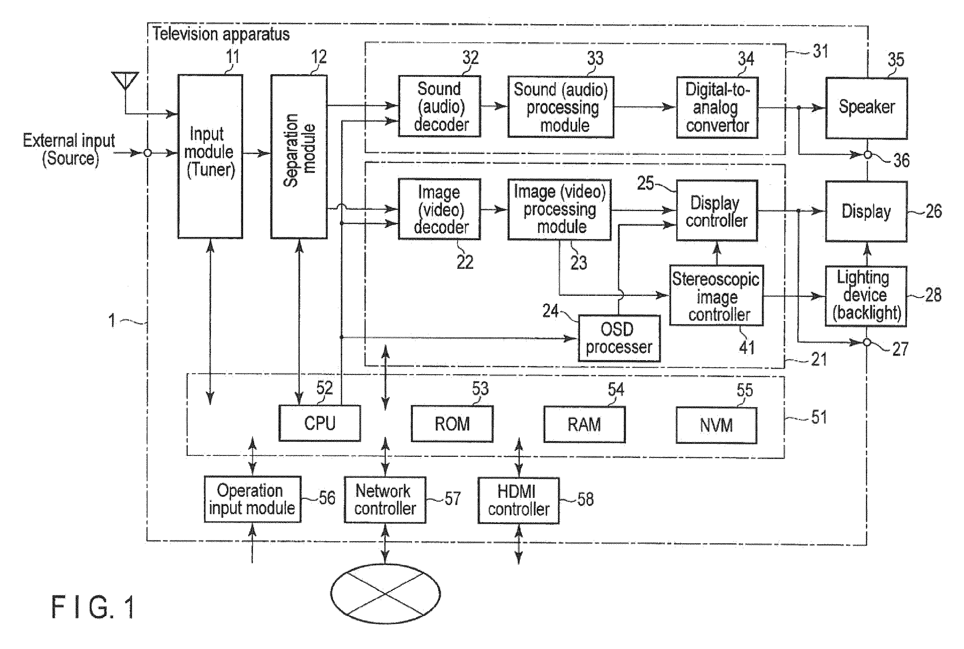

In an electronic apparatus shown in FIG. 1, for example, a three-dimensional image (3D image) display device (hereinafter referred to as a television apparatus) 1, a content or an external input signal obtained by an input module (tuner) 11 is separated into image data (video) and sound data (audio) by a separation module 12. The input module 11 is configured to identify the input image signal, namely the content, either as a normal image (2D) signal or as a three-dimensional (3D) image signal according to a control signal associated with the input image signal.

The image data (video) separated by the separation module 12 is decoded by an image decoder 22 in an image processing block 21 and output as a digital image signal (video output). Here, note that, if the content or the external input signal received by the input module 11 is, for example, an image or sound from a video camera, the separation by the separation unit 21 is certainly not necessary (can be omitted) though depending on the input format of the signal.

The digital image signal decoded by the image decoder 22 is converted by an image processing unit 23 into predetermined resolution and output format such that it can be displayed by a display 26 in a subsequent stage, synthesized with an on-screen display (OSD) image signal from an OSD processer 24 in a display device controller 25, converted into a display drive signal so as to be appropriately displayed (image reproduction) by the display 26, and supplied to the display 26. The output of the display device controller 25 may be directed to an output end 27 connectable, for example, with an external monitor device, a projection device (projector), or the like.

The display 26 comprises, for example, a liquid crystal display (LCD) panel, and is configured to selectively transmit source light from a lighting device (backlight) 28 and to display (reproduce) a display image. The lighting device 28 comprises LED elements which output red (R), green (G) and blue (B) light respectively to produce white light or an LED array of unified LED elements, and configured to emit light at a predetermined timing and with a predetermined intensity (light intensity) according to a drive signal from a backlight driver (lighting circuit) 29.

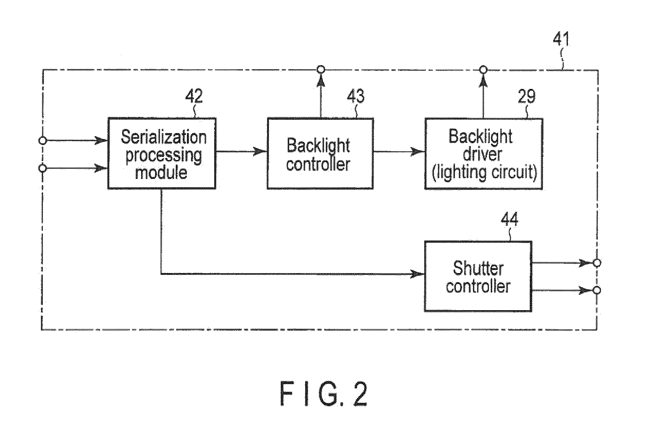

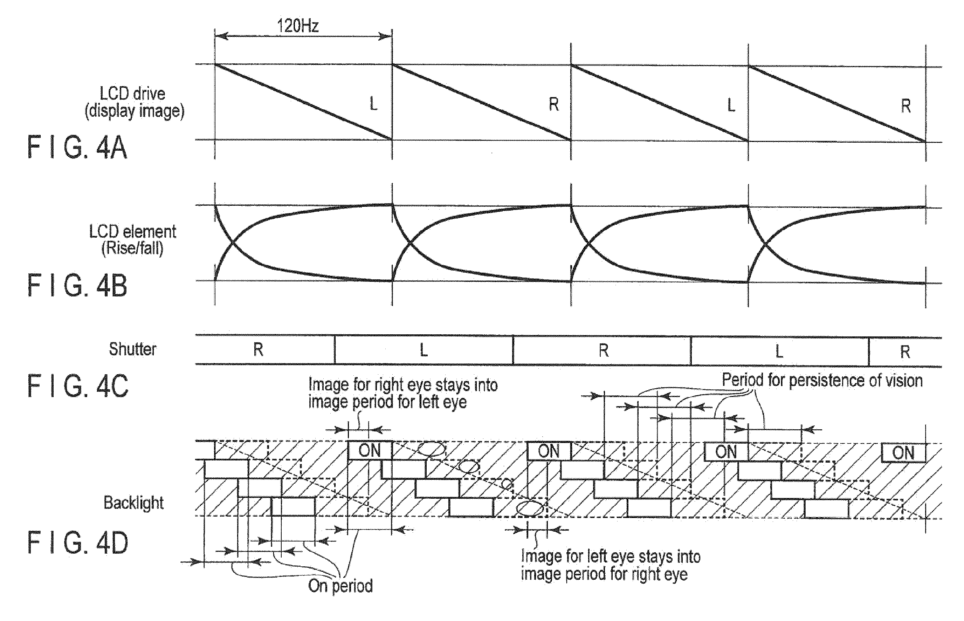

The display device controller 25 and the lighting device 28 are configured to operate at a predetermined timing which will be described later in FIGS. 4A-4D, 5A-5C, 6A-6C, 8A-8C, or, 9A-9C, under control of a backlight controller 43 in a preceding stage (FIG. 2).

The sound data (audio) separated by the separation module 12 is decoded by a sound decoder 32 and output as a digital sound signal (audio output).

The digital sound signal decoded by the sound decoder 32 is converted into a predetermined format to be appropriately reproducible by a speaker 35 in a subsequent stage by a sound (audio) processing module 33 and converted into an analog sound output signal by a digital-to-analog converter 34. The analog sound output signal may be branched off to an output end 36 which is connectable with an audio-visual (AV) amplifier, etc.

The television apparatus 1 further comprises a main control block 51 which is configured to control operations of the above-mentioned input module 11, separation module 12, image process block 21, a sound processing block 31, a stereoscopic image controller 41, etc. The main control block 51 comprises, for example, a central processing unit (CPU) 52, a read-only memory (ROM) 53, a random access memory (RAM [working memory]) 54, a non-volatile memory (NVM [rewritable memory]) 55, and the like. To the main control block 51, connected are an operation input module 56 configured to receive a control instruction input from a user, a network controller 57 configured to control acquisition of various information from an external network and to control access to a network such as the Internet, a High-definition Digital Multimedia Interface (HDMI) (registered trademark) controller 58 configured to communicate a control signal, image data and sound data to the other devices such as a video recording device or an image reproduction device complying with the standard of the HDMI for example, and the like.

The stereoscopic image controller 41 comprises, as shown in FIG. 2, a serialization processing module 42, a backlight controller 43, a shutter controller 44 and the like. The serialization processing module 42 is configured to apply serialization signal processing to the input image signals, namely, the image signal for the right eye and the image signal for the left eye which are digital image signals converted by the image process unit 23 into the predetermined resolution and output format. The backlight controller 43 is configured to acquire a backlight control signal to achieve source light corresponding to the image signals for the right and left eyes which are displayed by the display 26 in the order in which the images are serialized by the serialization processing module 42. The shutter controller 44 is configured to control closing of a shutter device 111 (glasses for stereoscopic view) by synchronizing the image signal for the right eye and the image signal for the left eye in the order in which the images are serialized by the serialization processing module 42 (to close a shutter for the left eye during the display period of the right-eye image and to close a shutter for the right eye during the display period of the left-eye image). The control signal from the backlight controller 43 is input to the display device controller 25 and input to the lighting device 28 through the backlight driver 29 shown in FIG. 1.

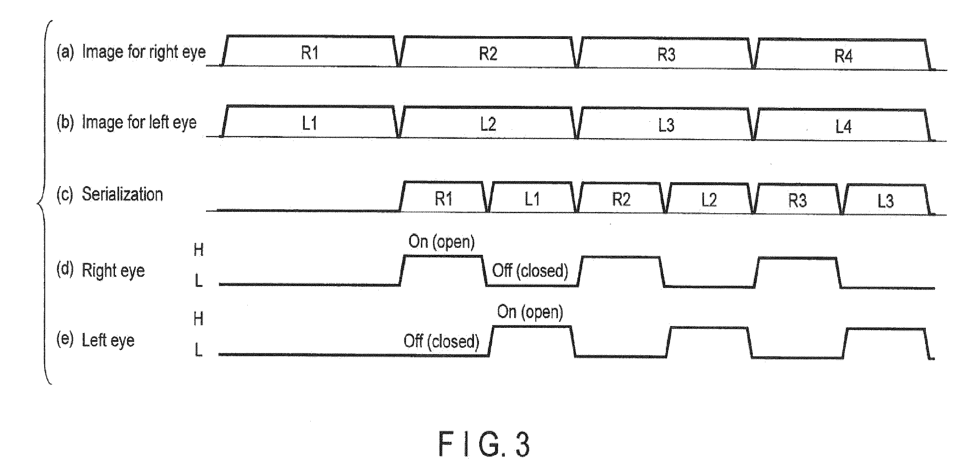

FIG. 3 shows respective examples of the serialized image signals for the right and left eyes by the serialization processing module 42, the input image signals for the right and left eyes to the serialization processing module 42 and shutter control signals to the shutter device 111.

FIGS. (a) of FIG. 3 to (e) of FIG. 3 show the relations between the right-eye and left-eye images displayed in the display 26 and the right-eye and left-eye shutter control in the shutter device 111.

If the image signals for the right eye R1, R2, R3, ..., each of which has a frame period of a 1/60 second as shown in (a) of FIG. 3 and the image signals for the left eye L1, L2, L3, ... , each of which has a frame period of a 1/60 second as shown in (b) of FIG. 3 are input to the serialization processing module 42, the image signals for the right eye and the image signals for the left eye are output alternately in a frame period of a 1/120 second as shown in (c) of FIG. 3. Consequently, the images for the right eye and the images for the left eye are displayed alternately in the display 26.

From the shutter controller 44, a shutter control signal for the right eye is output as shown in (d) of FIG. 3 and a shutter control signal for the left eye is output as shown in (e) of FIG. 3. More specifically, the shutter control signal for the right eye is high at such a timing that the shutter for the right eye of the shutter device 111 opens while the right-eye image is being displayed and low at such a timing that the shutter for the right eye closes while the left-eye image is being displayed. Similarly, the shutter control signal for the left eye is high at such a timing that the shutter for the left eye of the shutter device 111 opens while the left-eye image is being displayed and low at such a timing that the shutter for the left eye closes while the right-eye image is being displayed.

Here, in the lighting device (backlight) 28, since progress has been made on improving each color component (R, G, B) of color output (color gamut of light emitted) by LED elements or by an LED array to produce white light, a lighting device 28 producing a more desirable hue (tint) is available. However, as an example is shown in FIGS. 4A to 4D, it has been reported that, the white light from the lighting device 28 producing a more desirable hue (tint) may generate a persistence of vision because of the influence of secondary light emission using, for example, a phosphor or the like. Note that FIG. 4A shows an LCD drive signal (display image) to which the image signal for the right eye and the image signal for the left eye of FIG. (c) of FIG. 3 are extracted, and that FIG. 4B schematically shows characteristics of the rise and fall of an LCD of a corresponding LCD panel. In this case, when the shutters for the right and left eyes of the shutter device 111 shown in FIG. 4C are alternately opening and closing repeatedly as shown in FIGS. (d) of FIG. 3 and (e) of FIG. 3, source light from the backlight (lighting device) 28 which drives in order at a predetermined timing is maintained for longer than the display period of an image for one eye and still remains in the display period of an image (source light) for the other eye as shown in FIG. 4D, resulting in a persistence of vision. Note that, an image for right eye stays into image period for an image for left eye and an image for left eye stays into image period for an image for right eye. This persistence of vision (intrusion of source light) is a factor which degrades the quality of the stereoscopic image.

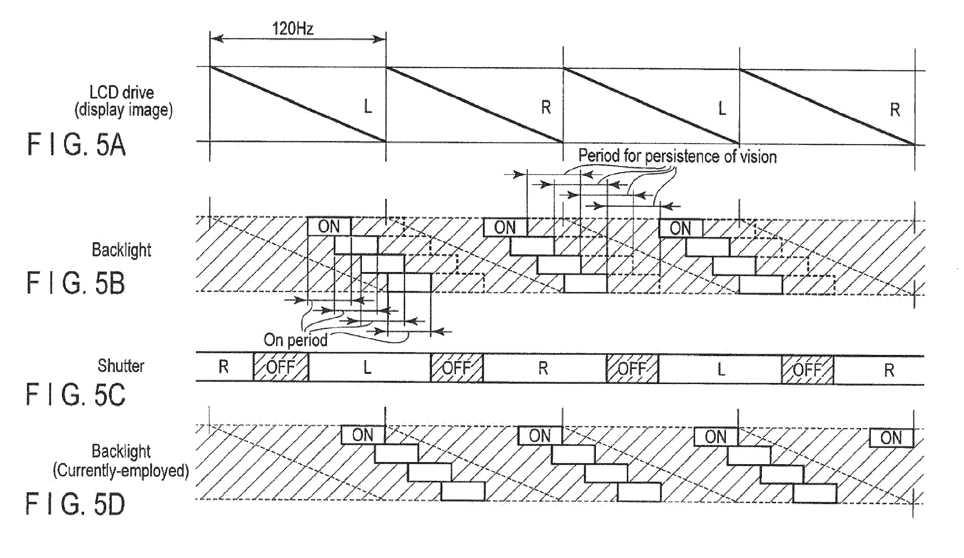

An example in FIGS. 5A to 5C illustrates reduction of the influence of the above-described the persistence of vision. An LCD drive signal of FIG. 5A is still the same as that of FIG. 4A, but the lighting period of the backlight 28 is set shorter than the display period of an image per frame by a predetermined period by the control of the backlight controller 43 as shown in FIG. 5B, and a period of closing both shutters (entirely closed period) is interposed between opening and closing the shutters for the right and left eyes of the shutter device 11 as shown in FIG. 5C. Note that FIG. 5D is an example of lighting of the backlight 28 shown in FIG. 4D which is provided along with the present example so that the present example can be easily compared with FIG. 4D with respect to a lighting period of the backlight 28.

It should also be noted that, as obvious from a comparison between FIG. 5B and FIG. 5D, the lighting period of the backlight 28 itself is also set shorter than that of FIG. 5D.

As shown in FIGS. 5A to 5C, the backlight 28 is controlled to set the scanning (light emission) timing of the backlight 28 faster and the lighting period of the backlight 28 itself shorter such that source light from the backlight 28 is effectively used when the display image (image display on the LCD panel) is in a stable condition. Furthermore, by setting the period of opening the shutter device shorter, that is, by setting the lighting period of the backlight 28 shorter than the display period of the image per frame by the predetermined period and by setting the entirely closed period to each shutter, the influence of the persistence of vision is cancelled out. Thus, the crosstalk between the right- and left-eye images can be reduced, and the quality of the stereoscopic image can be improved.

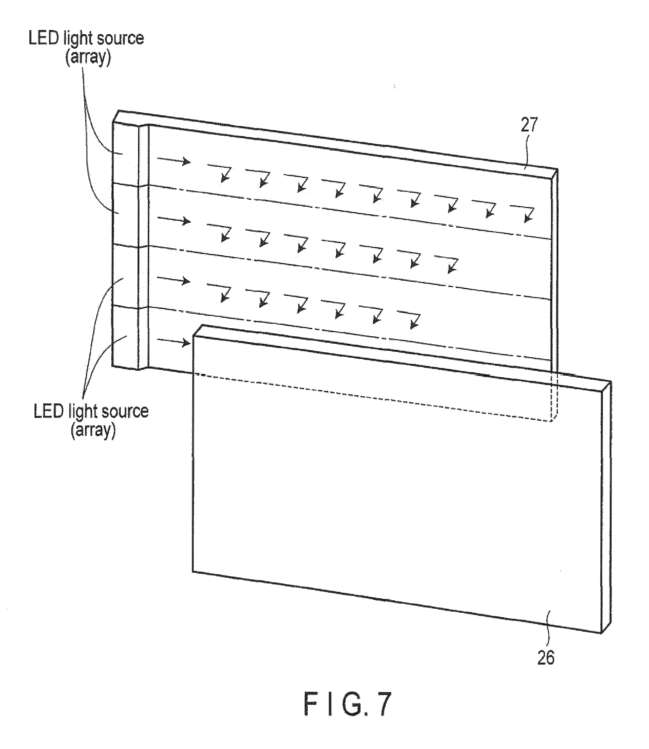

Note that the scanning (light emission) timing of the backlight 28 shown in FIG. 5B is useful for a television apparatus (in which a backlight is driven by a scanning mode) provided with the backlight 28 comprising, for example, four LED arrays (blocks) in a vertical scanning direction on one edge of an LCD panel (display) 26 as an example is shown in FIG. 7. That is, it is directly applicable to standard backlights which are currently in actual use.

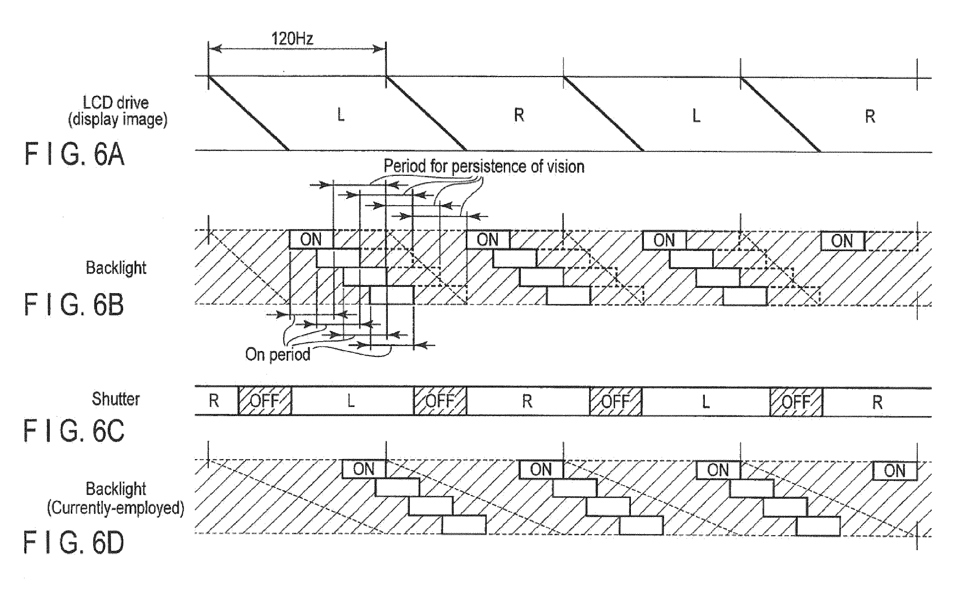

Examples in FIGS. 6A to 6C illustrate reduction of the influence of the above-described the persistence of vision. As compared to the examples of FIGS. 4A and 5A, the LCD drive signal of FIG. 6A is set shorter than the display period of an image per frame. That is, since it takes time for the LCD to become stable after an image is rewritten as shown in FIGS. 4D and 5B, it is preferable for a backlight to be lit after a lapse of a certain period when the LCD is rewritten. Note that the lighting period of the backlight 28 shown in FIG. 6B is set at such a timing that, even if a persistence of vision occurs by the lighting of the first LED array of the backlight of the scanning mode, the persistence of vision disappears by the time the display image (LCD drive) shown in FIG. 6A is switched. That is, the timing of lighting the backlight of FIG. 6B can be delayed with respect to the timing of rewriting the LCD as compared to that of FIG. 5B. In addition, as shown in FIG. 6C, the period of closing both shutters (entirely closed period) is interposed between opening and closing the shutters for the right and left eyes of the shutter device 111. Note that FIG. 6D is a lighting example of the backlight 28 shown in FIG. 4D which is provided along with the present example so that the present example can be easily compared with FIG. 4D with respect to a lighting period of the backlight 28.

As shown in FIGS. 6A to 6C, the backlight 28 is lit when the display image (image display of the LCD panel) is in a stable condition, whereby the crosstalk between the right- and left-eye images can be even further reduced and the quality of the stereoscopic image can be even further improved.

Note that the scanning (light emission) timing of the backlight 28 of FIG. 6B is as useful as that of FIG. 5B for a television apparatus (in which a backlight is driven by the scanning method) provided with four LED arrays in vertical scanning direction on one edge of the LCD panel (display) 26 which is shown in FIG. 7 as an example. That is, as described above with reference to FIGS. 5A to 5C, it is also directly applicable to standard backlights which are currently in actual use.

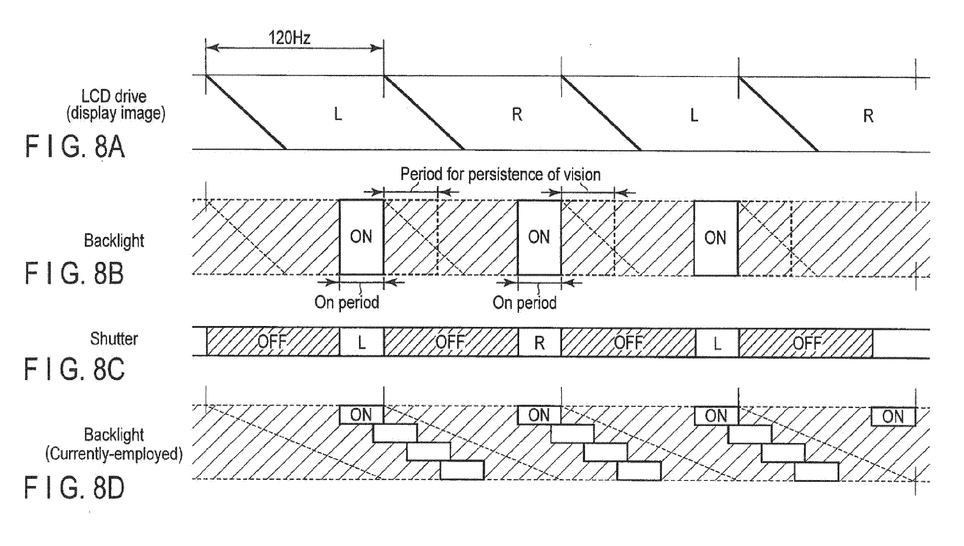

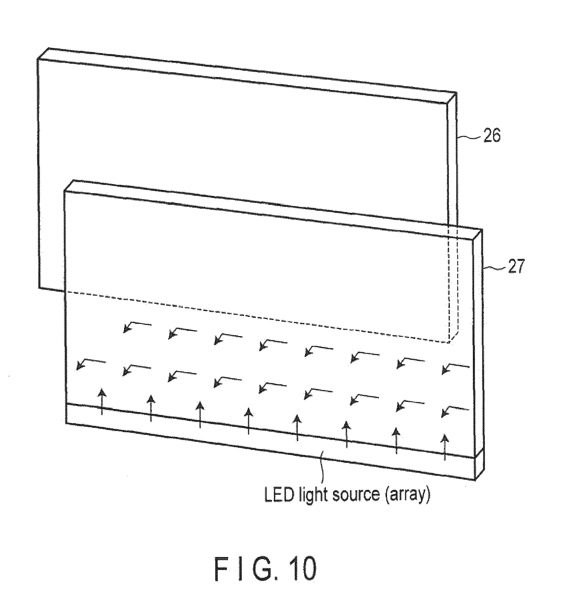

An example in FIGS. 8A to 8C illustrates reduction of the influence of the above-described the persistence of vision. As the example is shown in FIGS. 8A to 8C, an LCD drive signal of FIG. 8A is similar to that of FIG. 6A, but the lighting period of the backlight 28 is set to be shorter than the display period of the image per frame by a certain period by the control of the backlight controller 43 as shown in FIG. 8B, and set to be at a light emission (lighting) timing in combination with that of a television apparatus (in which the backlight is driven by a blinking mode) provided with an LED array in a horizontal scanning direction on one edge of the LCD panel (display) 26 which is shown in FIG. 10 as an example. A period of closing both shutters (entirely closed period) is interposed between opening and closing the shutters for the right and left eyes of the shutter device 111, and here, the shutters are substantially opened only during a period of the backlight 28 being on (emitting light) as shown in FIG. 8C. Note that FIG. 8D is a lighting example of the backlight 28 of FIG. 4D which is provided along with the present example such that the present example can be easily compared with FIG. 4D with respect to a lighting period of the backlight 28.

As shown in FIGS. 8A to 8C, if the backlight 28 is of the blinking mode, the period of the shutter device being open is set to substantially coincide with the lighting (light emission) period of the backlight, whereby the crosstalk between the right- and left-eye images can be reduced and the quality of the stereoscopic image can be improved.

Note that, since the backlight 28 capable of operating at the light emission timing of FIG. 8B is a backlight of the blinking mode which does not require the LED array (block) to be divided, it is possible to provide a more inexpensive backlight structure.

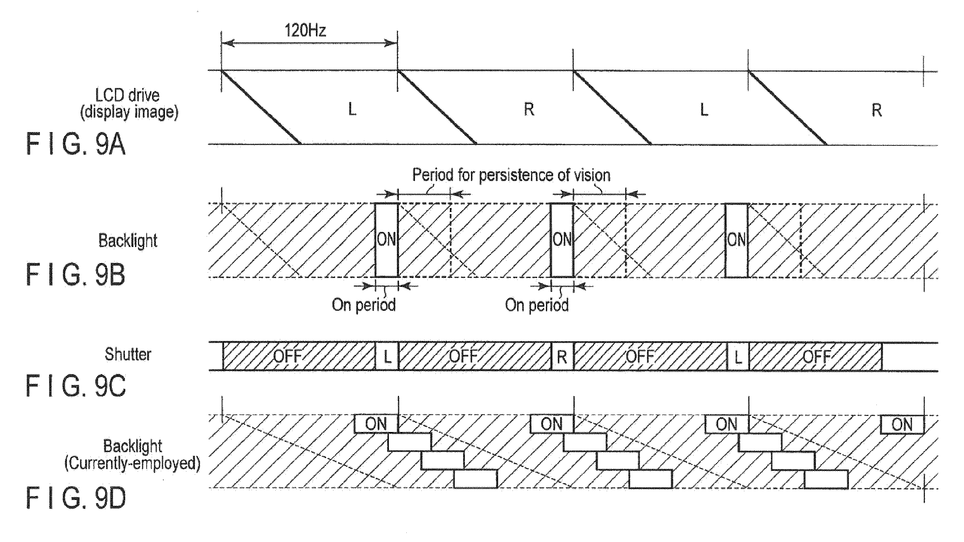

FIGS. 9A to 9C correspond to the method for reducing the influence of the persistence of vision shown in FIGS. 8A to 8C, but the lighting period of the backlight 28 is set further shorter as shown in FIG. 9B. Here, if a timing of opening the shutter of the shutter device 111 is set to coincide with a period of switching the backlight 28 on (light emission) as shown in FIG. 9C, the crosstalk between the right- and left-eye images can be further reduced and the quality of the stereoscopic image can be further improved. Note that the lighting period of the backlight 28 of FIG. 9B is set to be significantly shorter as compared to that of FIG. 8B. Therefore, it is desirable that the intensity of source light per hour (light emission intensity of backlight 28) be higher as compared to that of the example of FIG. 8B. Note that FIG. 9D is an example of lighting of the backlight 28 of FIG. 4D which is provided along with the present example so that the present example can be easily compared with FIG. 4D with respect to a lighting period of the backlight 28.

In this way, the backlight 28 can be switched on (emit light) when the display image of the liquid crystal display 26 (display pixel of the LCD panel) become more stable, and therefore the crosstalk can be more certainly reduced and the quality of the stereoscopic image can be improved.

Note that the display device (electronic apparatus) 1 shown in FIGS. 1 to 3 is not limited to a television apparatus but can be any device configured to display an image, and can be applied to, for example, a personal computer (PC) with a function of receiving broadcasts, a video display device (monitor) which is connected to a video recording device (recorder) with a broadcast receiving device, a mobile device with a function of receiving broadcasts, or the like. In addition, the image includes a moving image, a still image or text (data represented as strings of coded characters) and any combinations thereof in a broadcast provided by a broadcasting enterprise (broadcast station) by radio. Further, the images include those distributed by a distribution enterprise by a cable network using optical fiber, etc., an Internet Protocol (IP) network, or the like. The images include an image, sound and/or music and the like, and provide a program in certain time (broadcast time) units continuously or for a certain period (time). Note that the images may be referred to as content, a stream or a program.

## Claims

1. An electronic device (1) **characterized by** comprising:
an image signal output module (41) configured to output a first image signal for a first image and a second image signal for a second image alternately, the second image which is to be viewed alternately with the first image;
a display (26) configured to display the first image and second image corresponding to the first image signal and the second image signal output from the image signal output module;
a lighting module (28) configured to light the first image and second image displayed by the display;
a driving module (29) configured to control a lighting timing of the first image and second image by the lighting module; and
a shutter controller (44) configured to control a timing of opening a first shutter which makes the first image viewable and a second shutter which makes the second image viewable alternately, according to a timing of the alternate output of the first image signal and the second image signal by the image signal output module, while providing a period of closing both of the first shutter and the second shutter.

2. The electronic device of claim 1, **characterized in that**
the period of closing both of the first shutter and the second shutter by the shutter controller includes a period in which a persistence of vision occurred when the first image and second image displayed by the display is lit by the lighting module is in a period of switching the timing of the alternate output of the first image signal and the second image signal by the image signal output module.

3. The electronic device of claim 2, **characterized in that**
an end of the period of closing both of the first shutter and the second shutter by the shutter controller coincides with a timing of extinction of the persistence of vision occurred when the first image and second image displayed by the display is lit by the lighting module.

4. The electronic device of any of claims 1 to 3, **characterized in that**
the first image signal for the first image and the second image for the second image signal include an image signal for the right eye and an image signal for the left eye which produce a parallax when a display image corresponding to each image signal is to be viewed.

5. A display correction method **characterized by** comprising:
outputting a first image signal for a first image and a second image signal for a second image alternately, the second image which is to be viewed alternately with the first image;
displaying the first image and the second image corresponding to the first image signal and the second image signal;
lighting the first and second images displayed at a controlled lighting timing; and
controlling a timing of opening a first shutter which makes the first image viewable and a second shutter which makes the second image viewable alternately, according to a timing of the alternate output of the first image signal and the second image signal, while providing a period of closing both of the first shutter and the second shutter.

6. The display correction method of claim 5, **characterized in that**
the period of closing both of the first shutter and the second shutter includes a period in which a persistence of vision occurred when the first and second displayed images is lit by the lighting module is in a period of switching the timing of the alternate output of the first image signal and the second image signal.

7. The display correction method of claim 6, **characterized in that**
an end of the period of closing both of the first shutter and the second shutter coincides with a timing of extinction of the persistence of vision of the lighting of the first and second displayed images.
